# EUROPEAN PATENT SPECIFICATION

(11) **EP 1 947 722 B1**
(45) Date of publication and mention of the grant of the patent: **16.05.2012**
(21) Application number: 06823171.1
(22) Date of filing: 08.11.2006
(51) Int. Cl.: H01M 8/02, H01M 8/04, H01M 8/10

(54) **PROCESS FOR PRODUCTION OF FUEL CELL SEPARATORS AND FUEL CELLS COMPRISING SUCH SEPARATORS**
VERFAHREN ZUR HERSTELLUNG VON BRENNSTOFFZELLEN-SEPARATOREN UND BRENNSTOFFZELLEN SOLCHE SEPARATOREN ENTHALTEND
PROCÉDÉ POUR LA FABRICATION DE SÉPARATEURS POUR PILES À COMBUSTIBLE ET PILES À COMBUSTIBLE CONTENANT DE TELS SÉPARATEURS

(30) Priority: 09.11.2005 JP 2005324714
(43) Date of publication of application: 23.07.2008
(73) Proprietor: DIC Corporation, Tokyo 174-8520 (JP)
(72) Inventor: YASUMURA, Takashi, Takaishi-shi, Osaka 592-0001 (JP); HAMADA, Kenichi, Takaishi-shi, Osaka 592-0001 (JP); KANEMATSU, Takayuki, Takaishi-shi, Osaka 592-0001 (JP); KAWAMURA, Takashi, Takaishi-shi, Osaka 592-0001 (JP)
(74) Representative: Albrecht, Thomas
(86) International application number: PCT/JP2006/322267
(87) International publication number: WO 2007/055236

(56) References cited:
- EP-A1- 0 975 040
- EP-A2- 1 329 970
- WO-A1-98/53514
- JP-A- 10 003 931
- JP-A- 2000 243 410
- JP-A- 2000 251 903
- JP-A- 2001 283 873
- JP-A- 2002 208 409
- JP-A- 2002 313 356
- JP-A- 2004 103 271
- JP-A- 2004 139 967
- JP-A- 2005 302 621

## Description

### TECHNICAL FIELD

The present invention relates to a method of producing a fuel cell separator in which the hydrophilicity of the surface is improved. More particularly, the present invention relates to a method of producing a fuel cell separator in which the hydrophilicity of a channel portion of a gas flow passage is improved, and a fuel cell having stable power.

### BACKGROUND ART

A fuel cell directly converts chemical energy of a fuel into electric energy by supply of a fuel to electrodes, and is known as a power generation method having high energy conversion efficiency. In such a fuel cell, a fuel gas containing hydrogen is supplied to a cathode through a gas flow passage formed in a separator, while an oxidizing gas containing oxygen is supplied to an anode. However, when an electrochemical reaction proceeds in each of the electrodes, water is generated in the anode side.
Commonly, the generated water is evaporated in the oxidizing gas supplied to the anode side and is discharged out of the fuel cell together with the oxidizing gas. However, when the amount of water increases, it becomes impossible to discharge the water only by evaporation in the oxidizing gas. When the residual water that is not evaporated in the oxidizing gas forms water drops in the vicinity of the anode, the gas flow passage is blocked and the flow of the oxidizing gas is obstructed in the vicinity of the anode, which leads to the deterioration of cell performance.

It is required in the fuel cell separator that water generated upon power generation be quickly discharged to cause no blocking of the gas flow passage (channel). In that case, it is desirable that the surface of the separator, particularly the gas flow passage portion be hydrophilic. When the gas flow passage portion has high hydrophobicity, the gas flow passage is likely to be blocked by humidifying moisture and generated moisture, which leads to deterioration of power generation performance.

Therefore, the predetermined position of the member such as a fuel cell separator has conventionally been subjected to a hydrophilization treatment, thereby improving the discharging property of the generated water. In particular, by subjecting the gas flow passage portion to hydrophilization treatment, the generated water cannot be left as water drops, and as a result, it is possible to prevent the generated water from obstructing diffusion of a gas.

As a conventional method for subjecting a separator to hydrophilization treatment, the following method has been proposed.
That is, there is proposed a method in which an inlet or an outlet of the fuel passage is provided with a porous carbon member having a porosity of 30 to 80% and a hydrophilic film made of polyacrylamide is formed on the fuel flow gas passage surface, and preferably the oxidizing gas flow passage surface (see, for example, Japanese Unexamined Patent Application, First Publication No. Hei 8-138692).
Moreover, there is proposed a method in which a conductive separator surface made of various types of materials is subjected to a hydrophilization treatment such as low-temperature plasma treatment in a hydrophilizing gas, thereby imparting hydrophilicity (see, for example, International Publication No. WO99/40642), and a method in which the separator surface containing a resin binder is treated with frame at about 1,000°C thereby imparting hydrophilicity (see, for example, Japanese Unexamined Patent Application, First Publication No. 2002-313356).
Furthermore, there is proposed a method in which a mixture of a hydrophilic phenol resin and an epoxy resin is coated on the separator surface containing a resin binder and then cured, thereby imparting hydrophilicity (see, for example, Japanese Unexamined Patent Application, First Publication No. 2000-251903).

Furthermore, there is proposed a method in which a gel film containing silicon oxide as a main component is formed on the separator surface made of a glass-formed carbon member by a sol-gel method, and then a hydrophilic film with hydroxyl groups is formed by irradiation with vacuum ultraviolet rays (see, for example, Japanese Unexamined Patent Application, First Publication No. 2004-103271).
Among further prior art, JP 2005-302621 provides a fuel cell separator material made of a graphite/hardened resin molded body on the surface layer part of which a hydrophilic treatment is applied, and the wet tension of the surface measured by using a wet tension testing liquid is 40 mN/m or higher.
Among further prior art, EP 1 329 970 A2 provides a method for producing a fuel cell separator which is highly hydrophilic and undergoes little leaching of substances that inhibit power generation, the method comprising shaping a composition made primarily of an electrically conductive powder and a binder to form a shaped body, coating and impregnating the shaped body with a metal oxide-containing hydrophilic resin and curing the hydrophilic resin.
Among further prior art, WO 98/53514 discloses a gas impervious bipolar separator plate for a proton exchange membrane fuel cell having at least one electronically conductive material in an amount in a range of about 50% to about 95% by weight of the separator plate, at least one resin in an amount of at least about 5% by weight of the separator plate, and at least one hydrophilic agent, where the electronically conductive material, the resin, and the hydrophilic agent are substantially uniformly dispersed throughout the separator plate.
Among further prior art, JP 10-003931 A discloses a method for manufacturing a separator having a hydrophilic property, wherein a hydrophilic material is mixed in carbonaceous material in advance to prepare a raw material, which is packed into a die having a given shape, and a specified pressure is supplied to the inside of the die to perform press molding to produce a separator, thus avoiding a special treatment for hydrophilicity.
Among further prior art, JP 2001-283873 A discloses a separator board which is a structural element of a polymer electrolytic fuel cell, which is manufactured by die forming a mixture with a binder and carbon particles or a carbon fiber, which is given a hydrophilic functional group on the surface.
Among further prior art, JP 2000-243410 A provides a method for producing a separator for a fuel cell comprising applying a surface modifying treatment on a surface of a molding so that contact angle with water is not greater than 40 degrees. In this manufacturing method, expanded graphite powder and resin are mixed uniformly and are formed, followed by irradiation with ultraviolet ozone on the surface of the molding to oxidize the surface of the molding.

However, the hydrophilic coating film obtained by coating a hydrophilic coating material or a hydrophilic resin on the separator surface is likely to be swollen by water absorption, causing a volume change, and there is high possibility that the coating film will be peeled off from the base material. Alternatively, there is high possibility that hydrophilicity will be lost as a result of gradual elution during use and this method is inferior in practicability. Moreover, there is possibility that the eluate adversely affects power generation characteristics.
In the case of subjecting a coating film on the surface of the separator having a rib structure to a plasma treatment, it becomes difficult to maintain surface hydrophilicity for a long period because the thickness of the hydrophilized layer on the surface is small in about the submicron order, and the electromotive force becomes unstable by accumulation of the generated water along with deterioration of hydrophilicity, thus causing a decrease in the electromotive force.
When a hydrophilic substance containing no conductive substance such as epoxy resin or silicon oxide is coated on the separator surface, an insulating film is formed on the separator surface, and thus there arises a problem in that conductivity with a gas diffusion electrode deteriorates and a treatment for ensuring conductivity is required.

As described above, the problem of the generated water being accumulated in the gas passage and not being smoothly discharged, thereby decreasing the electromotive force, need to be solved. Therefore, it is required to provide a separator having a rib structure, which can ensure conductivity and impart stable hydrophilicity.

### DISCLOSURE OF THE INVENTION

In light of these requirements, an object of the present invention is to provide a method of producing a fuel cell separator in which hydrophilicity is further improved and wettability with water within a wide range of the channel portion as a flow passage of the fuel gas is improved, and also to provide excellent conductivity.

The present inventor have intensively studied the above-described problems and found that, when a solution of a radically polymerizable monomer having a hydrophilic group is coated on a channel portion on the premolded article surface and is graft-polymerized by irradiating with ionizing radiation, a hydrophilic polymer layer is formed on the channel portion to obtain a fuel cell separator having good wettability and excellent conductivity. Thus, the present invention has been accomplished.

That is, the present invention provides a method of producing a fuel cell separator in which at least a portion of a premolded article composed of a thermosetting resin and a carbon material, or a thermoplastic resin and a carbon material is provided with hydrophilicity, including the steps of:
(1) treating the premolded article for enhancing hydrophilicity with a solution of a radically polymerizable monomer having a hydrophilic group and/or a functional group which can be converted into a hydrophilic group;
(2) coating the solution of the radically polymerizable monomer having a hydrophilic group and/or a functional group which can be converted into a hydrophilic group, on the treated surface;
(3) irradiating the treated surface with ionizing radiation; and
(4) cleaning the fuel cell separator obtained through steps 1 to 3,
wherein steps 1 to 4 are sequentially carried out, or step 1, step 3, step 2, and step 4 are sequentially carried out.

In the fuel cell separator obtained in the present invention, the surface is hydrophilized without impairing physical properties such as mechanical strength and conductivity, and therefore the discharging property of water is excellent. Moreover, hydrophilicity is provided in the site requiring hydrophilicity by a graft polymerization, and therefore a desirable product can be provided. That is, the radically polymerizable monomer having a hydrophilic group is coated only on a channel portion, and the separator has high wettability with water generated in the channel inner portion through steps such as radiation processing, and also the water can be allowed to flow and discharged without being accumulated. Consequently, in such a separator, supply of the fuel gas is not prevented by excess water, and therefore a fuel cell stack including the separator incorporated therein shows a stable electromotive force, thus making it possible to stably generate power over a long period.

### BEST MODE FOR CARRYING OUT THE INVENTION

The present invention will now be described in detail.
The present invention is a method of producing a fuel cell separator provided with hydrophilicity by coating a solution of a radically polymerizable monomer having a hydrophilic group on at least a portion of a premolded article composed of a thermosetting resin and a carbon material, or a thermoplastic resin and a carbon material, and irradiating the premolded article with radiation.
First, the premolded article composed of a thermosetting resin and a carbon material, or a thermoplastic resin and a carbon material is formed.
The term "premolded article" as used herein means a premolded article having a predetermined fuel cell separator shape obtained by curing a molding material containing a thermosetting resin and a carbon material by heating, or a premolded article obtained by melting a molding material containing a thermoplastic resin and a carbon material by heating to make a material have a predetermined fuel cell separator shape, and cooling and solidifying the material. In the case of using a thermosetting resin, the premolded article constitutes a three-dimensional cross-linked structure.
Such a carbon material includes artificial graphite, phosphorus-flake-shaped natural graphite, block-shaped natural graphite, expanded graphite, carbon black, acetylene black, ketjen black, amorphous carbon, and so forth. One or a mixture of two kinds or more can be used. In particular, in the case of using the carbon material as the fuel cell separator, preferably, the material is a graphite having an average particle size of 100 to 400 µm, and more preferably, a graphite having an aspect ratio of 1 to 5 and average particle size of 200 to 300 µm. As the carbon material, a fiber made of the above-described carbon raw material such as a carbon fiber having a fiber length of 1 to 15 mm, mat, sheet, and paper, can be used.

Moreover, the thermosetting resin is not particularly limited and includes, for example, polycarbodiimide resin, phenolic resin, furfuryl alcohol resin, epoxy resin, urea resin, melamine resin, unsaturated polyester resin, vinylester resin, bismaleimide triazine resin, polyaminobismaleimide resin, diallyl phthalate resin, and so forth. Among them, vinylester resin is preferable. The thermosetting resin is used in a powder, or used in a viscous liquid as it is, or mixed with a liquid reactive diluent such as styrene and used in a liquid form.
Moreover, the thermoplastic resin includes polyphenylene sulfide, polyolefin, polyamide, polyimide, polysulphone, polyphenylene oxide, liquid crystal polymer, polyester, and so forth. Among them, polyphenylene sulfide is particularly preferable because of its excellent heat resistance and acid resistance.
The thermosetting resin and thermoplastic resin are selected and used appropriately according to purposes and required performance.

To the molding compound for the premolded article, various compounding agents adapted to the resin can be further added. For example, in the case of a vinylester resin, it is preferable to use a polymerization initiator such as organic peroxide, a thickening agent for providing preferable viscosity in compression formation, a low-profile additive for relaxing shrinkage stress in the curing reaction, and additionally, a release agent and a polymerization regulator, if necessary. Moreover, in the case of using polyphenylene sulfide, it is preferable to use a release agent and an antioxidizing agent so as to improve formability and to prevent thermal degradation.

The resulting molding compound can be molded into a premolded article by using various molding methods such as compression molding and injection molding by using a mold having a desired shape.

In the case of using the thermosetting resin as the material composing the premolded article, a molding compound in an uncured state that is made of the resin and the carbon material is preshaped, and next the preshaped molding compound is put in a mold having a separator shape, and heated and compressed and molded to obtain a premolded article. The heating temperature varies depending on the type of the thermosetting resin used and is commonly from 100 to 200°C and the pressure is suitably from 15 to 60 MPa.
Moreover, in the case of using the thermoplastic resin as the material constituting the premolded article, the sheet made of the resin and the carbon material is molded, and the sheet is heated at a temperature of a glass transition point or higher and a melting point or lower, and the heated sheet is put in the mold having a separator shape, and heated to the melting point or more and compressed and molded, and then cooled and thereby the premolded article can be produced. In this case, as the added pressure, generally, the condition of 10 to 50 MPa is appropriate.

According to the present invention, a fuel cell separator is obtained by subjecting the premolded article obtained above to (1) a pretreatment (step 1), (2) coating a solution (hereinafter, grafting solution) of a radically polymerizable monomer having a hydrophilic group (step 2), (3) irradiating with ionizing radiation (step 3), and (4) cleaning the premolded article (step 4).
Steps 1 to 4 will now be sequentially described.

### (Step 1)

In this step, the premolded article is preliminarily treated so as to improve hydrophilicity with a grafting solution. The pretreatment includes, for example, blast treatment, ultraviolet irradiation treatment, ultraviolet ozone treatment, plasma treatment, corona treatment, acid treatment and alkaline treatment, and a method adapted to the purpose can be appropriately selected. However, blast treatment and ultraviolet irradiation treatment are preferable. Any one of the blast treatment and the ultraviolet irradiation treatment or both of the treatments may be performed. At this time, it is desirable to sufficiently remove an external release mold agent used in molding.
The blast treatment is a treatment that blows glass particles into the premolded article and shaves the surface and forms minimal irregularity.
In the ultraviolet irradiation treatment, the ultraviolet ozone treatment, the plasma treatment and the corona treatment, hydroxyl groups and carboxyl groups as polar groups are formed on the surface by each of the chemical treatments.
The acid treatment is a treatment that removes impurities on the surface such as a release mold agent by immersing the premolded article in a concentrated sulfuric acid and performing the treatment under warming. Moreover, the alkaline treatment is a treatment that removes impurities on the surface such as a release mold agent in the same manner by immersing the premolded article in a sodium hydroxide solution and performing the treatment under warming.
Because the affinity between the grafting solution and the substrate is enhanced by step 1, the grafting is efficiently performed by irradiation with ionizing radiation of step 2, and thereby a separator having excellent hydrophilicity and excellent long-term durability can be obtained.
If step 1 is not performed, the grafting is not sufficiently performed in step 2 and therefore dropping out of the hydrophilic components in the cleaning of step 3 are caused and good hydrophilicity cannot be obtained. Furthermore, there is a possibility that the hydrophilicity is degraded in operation of the fuel cell and the power generation characteristic is harmfully affected.

(Step 2) In this step, the solution of a radically polymerizable monomer having a hydrophilic group and/or a functional group which can be converted into a hydrophilic group is coated on at least a portion of the surface of the premolded article. "A portion" of "at least a portion of the surface of the premolded article" is a gas flow passage of the premolded article.
The solution of the radically polymerizable monomer having a hydrophilic group and/or a functional group which can be converted into a hydrophilic group is a compound having a functional group reacted with a radical generated by irradiation with ionizing radiation and having a hydrophilic functional group forming a polymer.

The hydrophilic group and/or a functional group which can be converted into a hydrophilic group includes a carboxyl group, lactam ring, sulfonic acid group, hydroxyl group, silyl group, epoxy group, phosphoric acid group, N,N-dialkylamino group, and N-alkylamido group.
Among the functional groups, in view of the stability of the hydrophilic effect, a lactam ring, hydroxyl group silyl group, and epoxy group are desirable.
Typical examples of compounds having such functional groups include, for example, monomers having a carboxyl group such as (meth)acrylic acid, fumaric acid, maleic acid, itaconic acid, and their salts, monomers having a lactam ring such as N-vinyl pyrrolidone and N-vinylcaprolactam, monomers having a sulfonic acid group such as sulfobutyl methacrylate, acrylamide propane sulfonic acid, styrene sulfonic acid, and vinylsulfonic acid, monomers having a hydroxyl group such as a (meth)acrylate ester containing hydroxyl group, glycerin monomethacrylate, hydroxyethyl (meth)acrylate, and N-hydroxyethyl(meth)acrylamide, monomers having a silyl group such as vinyltriethoxysilane and triethoxypropyl methacrylate, monomers having an epoxy group such as a (meth)acrylate ester containing epoxy group such as glycidyl methacrylate, monomers having a phosphoric acid group such as a (meth)acrylate ester containing phosphoric acid group such as methacryloyloxyethyl acid phosphate, monomers having a N,N-dialkylamino group such as a N,N-dimethylaminopropyl(meth)acrylamide, monomers containing an N-alkylamido group such as N-isopropyl(meth)acrylamide, and so forth. Other radically polymerizable monomers containing a hydrophilic group includes vinylbenzoic acid and its salt, additionally, (meth) acrylic polyoxyalkylene ester compound, and so forth.
Moreover, the radically polymerizable monomer may have a functional group which can be converted into a hydrophilic group such as a carboxylic group, sulfonic group, hydroxyl group, and silanol group by hydrolysis after contact with water.
In this case, a monomer having a less harmful affect on the fuel cell characteristic is appropriately selected and used.

Among the radically polymerizable monomers, in view of exerting a hydrophilizing effect and hydrolysis resistance, it is particularly preferable to use (meth)acrylate ester containing a hydroxyl group, (meth)acrylate ester containing a glycidyl group, vinyltriethoxysilane, and N-vinylcaprolactam. Among them, in particular, N-vinylcaprolactam is desirable. In poly-N-vinylcaprolactam obtained by polymerizing the N-vinylcaprolactam, since it is possible to simultaneously satisfy both of hydrophilicity and hot-water resistance, which has conventionally been difficult, decomposition is less likely to occur in hot water at 100°C or lower.
The radically polymerizable monomer can be used alone or two or more kinds of the monomers can be mixed and used. Another monomer may be mixed therewith and copolymerized. Moreover, in the range in which the hydrophilicity is not damaged, a hydrophobic (meth)acrylic monomer and so forth may be used together. In addition, the kind of monomer is appropriately selected and used considering the balance between hydrophilicity and water resistance of the surface.

It is preferable that the grafting solution used in the present invention be used by diluting the radically polymerizable monomer in a solvent such as water or a watersoluble organic solvent. Such a solvent includes, for example, a mixed solvent of water and methanol, lower alcohol such as ethanol, and so forth. By diluting the monomer in such a solvent, the wettability of the premolded article with respect to the grafting solution is improved and efficiency of the grafting by radiation is enhanced, and the premolded article surface can be provided with good hydrophilicity. Moreover, by using a diluted solvent, effects can be achieved such that gelation of the homopolymer components existing together with the unreacted radically polymerizable monomer is reduced after irradiation with ionizing radiation of the later-described step 3 and that the cleaning in the later-described step 4 is made easy.

The diluting concentration of the radically polymerizable monomer(s) is different according to the used monomer, composition of the diluting solvent, and surface state of the molded article. However, the concentration is 10 to 80% by weight, and preferably 20 to 60% by weight.
The solvent composition is different according to the used monomer and the surface state of the molded article in the same manner. Preferably, a ratio of water/water-soluble organic solvent= 0/100 to 80/20 (% by weight), although the watersoluble organic solvent can be used alone.
To the grafting solution, additionally, a polymerization regulator such as copper chloride or hydroquinone can be added, if necessary. Moreover, if there is no problem in its performance, an additive such as a surfactant may be used.

It is preferable that in the grafting solution, an inert gas such as nitrogen be bubbled immediately before use and the dissolved oxygen be preliminarily reduced. Furthermore, it is also preferable that the coating of the grafting solution be performed under an inert gas atmosphere. Thereby, furthermore, the dissolved oxygen can be further reduced and the effect of the grafting by irradiation with radiation can be further enhanced.
In the surface of the premolded article, there is a so-called gas flow passage (channel) portion through which an fuel gas, an oxidant gas and cooling water are flowed, and because hydrophilicity of this portion is required, it is preferable to coat the grafting solution only on this portion. However, coating to the entire surface of the premolded article is possible. The term "at least a portion of the premolded article surface" refers to the above description.

The method for coating the grafting solution is not particularly limited and includes a method of using a brush, spraying, curtain coating, and so forth. Both of the coating of entire separator and the coating only of the electrode portion are possible.
The thickness of the coating layer is commonly from about 0.01 to 0.5 mm, depending on the composition of the grafting solution and concentration of the radically polymerizable monomer. In particular, the electrode channel portion is filled with the grafting solution, and even if the thickness is 0.5 mm or more, the grafting can be performed as long as the layer has a capability such that ionizing radiation can sufficiently reach the channel bottom portion.

Moreover, immediately after coating the grafting solution, the ionizing radiation irradiation treatment of the next step may be performed. On the other hand, for enhancing penetration of the grafting solution to the premolded article surface, it is desirable to perform irradiation with radiation after the surface is allowed to stand at room temperature after the coating. The standing time is from about 1 min to 5 days, depending on the used premolded article and the grafting solution. In addition, in the case that the standing time is long, for preventing the grafting solution from vaporizing and from changing in quality, it is desirable to seal and store the premolded article in a container, a bag, and so forth having high airtighness.

### (Step 3)

In the present invention, next, the surface on which the grafting solution is coated is irradiated with ionizing radiation.
As the ionizing radiation, α-ray, β-ray (electron beam), γ-ray, and so forth can be used. Among them, from productivity and handling properties of the apparatus, it is desirable to use electron beam.
For example, the graft polymerization by electron beam includes a preirradiation method in which irradiation with electron beam is performed only on the premolded article and next the premolded article is contacted with the monomer, and a simultaneous irradiation method of performing the irradiation with electron beam under co-existence of the premolded article and the monomer.
The preirradiation method involves performing the irradiation with electron beam and then coating with the grafting solution of step 2. In this case, for further promoting the polymerization, it is preferable to perform warming treatment at 40 to 100°C for about 1 to 4 hours. The preirradiation method is a method of conducting step 3 and then conducting step 2.
The simultaneous irradiation method is to conduct step 2 and then to conduct the irradiation with electron beam of step 3. Because the irradiation with electron beam is performed under the co-existence of the monomer, the graft efficiency is higher than that of the preirradiation method, and the productivity is high. Accordingly, in the present invention, from the viewpoint of expression of a hydrophilic effect and the viewpoint of the productivity, the simultaneous irradiation method is more preferable.

The irradiation with electron beam is performed generally by using irradiation with an electron beam apparatus.
In the irradiation using an electron beam apparatus, acceleration voltage is proportional to the penetration force of the electron beam and therefore is generally determined appropriately according to the depth of the electron beam reach estimated from the density of the premolded article and the depth of the hydrophilization treatment to be targeted. However, in the actual operation, because the hydrophilizing effect cannot be occasionally obtained by the acceleration voltage, the acceleration voltage is determined from the measurement value of the contact angle and the measurement value such as wettability with water so that the hydrophilizing effect to be targeted can be obtained.
It is preferable that the acceleration voltage be 100 to 5000 kilovolts (hereinafter, referred to as "kV"). Further preferably, the voltage is 200 to 1000 kV. If the acceleration voltage is in this range, the surface of the premolded article made of the resin and the carbon material can be uniformly grafted.

The irradiation dose of radiation is appropriately determined considering the hydrophilicity to be targeted and deterioration of physical properties of the substrate caused by the irradiation. Generally, about 20 to 1000 kilograys (hereinafter, referred to as "kGy") is preferable. Preferably, the dose is from 100 to 800 kGy. If the irradiation dose is less than 20 kGy, graft polymerization is not sufficiently performed according to type of the monomer used. Moreover, if the irradiation dose is more than 1000 kGy, physical properties of the substrate deteriorate.
Irradiation with radiation may be performed by irradiating in a predetermined irradiation dose by single or plural portions. In both cases of irradiation by single or plural portions, a dose per time is preferably from 20 to 400 kGy. If the irradiation dose by a single portion is too high, the premolded article or the grafting solution reaches a high temperature and there is possibility of thermal degradation. The atmosphere in case of irradiating with ionizing radiation may be either air or an inert gas such as nitrogen. However, the treatment is preferably performed in a nitrogen atmosphere.
In the fuel cell separator, in the case of subjecting the gas flow passages of both front and back surfaces to the grafting, generally, the irradiation with radiation is performed at one side. However, in the case that the radiation reaches the back surface and desired hydrophilicity is obtained in the both front and back surfaces, irradiation only from one surface is possible.

Moreover, after irradiating with ionizing radiation, for further promoting the grafting treatment and enhancing hydrophilicity, heating treatment may be performed. It is preferable that heating be performed under the condition of a temperature of 40 to 120°C for 1 to 120 min. In the case of using a premolded article that is difficult to be grafted or a monomer that is slow to be polymerized, it is preferable that the heating temperature be set relatively high and the heating time be set long. The heating method is not particularly limited and a method adapted to the processes and the equipment is appropriately selected and performed.

Furthermore, the premolded article subjected to the grafting treatment can be subjected to a chemical treatment. By the treatment, the hydrophilicity can be further enhanced. Such a chemical treatment includes acid treatment such as sulfuric acid and alkaline treatment such as sodium acid carbonate solution.
Moreover, step 2 and step 3 of the grafting treatment may be repeated plural times, if necessary.

### (Step 4)

The fuel cell separator obtained by being subjected to irradiation with ionizing radiation in the above-described step 2 and step 3 is cleaned with water or a solvent. The cleaning is performed by appropriately selecting a method adapted to the separator material and the type of the graft polymer.
For example, first, for removing any excessive grafting solution and excessive adsorbed polymer, cleaning is performed with ion-exchanged water and so forth. The condition in this case is, for example, from about 30 to 60°C for 5 to 30 min, and cleaning is performed plural times in this condition, if necessary. Furthermore, for completely removing the adsorbed polymer and such, it is preferable to perform the cleaning with hot water. The condition in this case is, for example, from 60 to 100°C for about 30 to 120 min, and the cleaning is performed plural times in this condition, if necessary.
Step 4 is for preventing the unreacted radically polymerizable monomer, the diluting solvent, the adsorbed polymer, and so forth from eluting off during the fuel cell operation and from harmfully affecting the power generation characteristic of the fuel cell.
The cleaning step of step 4 is an essential step for maintaining the quality required of the fuel cell separator.
Then, by performing drying, the molded article of the fuel cell separator whose surface is hydrophilized can be obtained. The drying method includes a method for performing drying by using an instrument such as a hot-air drier, a vacuum drier, or infrared drier. In the case that complete drying is not required, the drying is performed by allowing to stand at room temperature. The drying condition is, for example, from 20 to 100°C for about 30 to 120 min. The drying is usually conducted once, but may be performed plural times, if necessary. Moreover, in this case, it is desirable that water drops be removed by air blowing and then dried.

By sequentially performing steps 1 to 4, the fuel cell separator used in the present invention can be obtained.
On the surface of such a fuel cell separator, particularly in the channel portion, a hydrophilic polymer layer is subjected to graft polymerization by irradiation. The polymer layer is chemically bonded to the separator and the hydrophilicity is not substantially changed during storage while standing at room temperature. Moreover, it was confirmed that the performance was maintained for a long period even in the evaluation of a boiling test and the film was not a coating film by simple adsorption and so forth. Furthermore, the hydrophilicity was not changed before and after the actual operation of the fuel cell, and the excellent durability was maintained. Additionally, high conductivity essential for the separator was maintained.

The fuel cell separator whose surface is hydrophilized of the present invention is used in a fuel cell stack by combining a plurality of simple cells connected through a gas diffusion layer (GDL). Such a fuel cell includes a solid polymer type fuel cell, phosphate fuel cell, and so forth.

### Examples

The present invention will now be described by way of Preparation Examples, Examples and Comparative Examples. In these Examples, parts and percentages are by weight.

### [Preparation of <thermosetting resin molding compound> serving as a substrate used in the present invention]

### (Preparation Example 1) (Preparation of thermosetting conductive molding compound)

In a kneader having a stirring capacity of 2 L, 1235 g of a carbon powder (average particle size: 250 microns), 315 g of a bisphenol A type vinyl ester resin, 3.2 g of t-butylperoxyisopropyl carbonate, 4.8 g of a polyethylene powder (low profile additive) and 43.2 g of a polymethyl methacrylate powder were charged and then mixed with stirring at room temperature.
Then, the resulting mixture was charged in a bag made of a gas barrier multilayered film, followed by sealing. This bag was allowed to stand in a storehouse at 45°C for 24 hours, taken out and then air-cooled at room temperature. The resulting molding compound is referred to as a thermosetting resin molding compound C-1.

### (Preparation Example 2) <Production of separator-shaped premolded article for fuel cell> of substrate used in the present invention

The thermosetting resin molding compound C-1 obtained in Preparation Example 1 was shaped according to the premolded article, cut, weight-controlled and then charged in a separator-shaped die for a fuel cell. Using a compression molding machine, a separator-shaped molded article for a fuel cell having a size of 23x23 cm², a thickness of 2.8 mm, a channeled passage width of an electrode portion of 1 mm and a depth of 0.8 mm was produced by molding under the conditions of a surface pressure of 33 MPa, a male die temperature of 140°C, a female die temperature of 150°C and a molding time of 5 minutes. Then, the unwanted portion was cut. The resulting molded article is referred to as a premolded article F-1.

### (Preparation Example 4) <Preparation of grafting solution> used in the present invention>

40 g of N-vinylcaprolactam (manufactured by ISP Japan under the trade name of V-CAP/RC) and 60 g of ethanol were mixed with stirring at room temperature to obtain a pale yellow solution. The concentration of the monomer was 40%. The resulting solution is referred to as a grafting solution G-1.

### (Preparation Example 5) <Preparation of grafting solution> used in the present invention>

40 g of glycerol methacrylate (manufactured by NOF CORPORATION under the trade name of BLEMMER GLM) and 60 g of ethanol were mixed with stirring at room temperature to obtain a pale yellow solution. The concentration of a monomer was 40%. The resulting solution is referred to as a grafting solution G-2.

### Example 1

Using a blasting device, the electrode portion (channel portion) of the premolded article F-1 obtained in Preparation Example 2 was pretreated by subjecting it to a blast treatment. The channeled passage of the electrode portion of the premolded article was uniformly coated with the grafting solution G-1 subjected to a nitrogen gas blowing treatment in atmospheric air, followed by drying at room temperature for about 10 minutes. Then, the premolded article was irradiated with electron beam in a nitrogen atmosphere at room temperature under the conditions of an acceleration voltage of 300 kV and an irradiation dose of 200 kGy. To remove the unreacted component, the premolded article was washed twice with ion-exchanged water at room temperature and then washed with ion-exchanged water at 95°C for 3 hours. Finally, the premolded article was washed with ion-exchanged water at room temperature and then dried at room temperature for 24 hours. Thus, a separator H-1 for a fuel cell was obtained. With respect to this separator, wettability with water of the channeled passage of the electrode portion, conductivity, hot water resistance, and operating characteristics of the fuel cell were evaluated. The evaluation results are shown in Table 1.

### Example 2

The same operation as in Example 1 was conducted, except that grafting solution G-2 was used in place of grafting solution G-1. Thus, a separator H-2 for a fuel cell was obtained. Also with respect to this separator, wettability with water of the channeled passage of the electrode portion, conductivity, hot water resistance, and operating characteristics of the fuel cell were evaluated in the same manner as in Example 1. The evaluation results are shown in Table 1.

### Example 3

The same operation as in Example 1 was conducted, except that a surface treatment was conducted for 30 minutes using a UV ozone treatment device in place of the blast treatment. Thus, a separator H-3 for a fuel cell was obtained. Also with respect to this separator, wettability with water of the channeled passage of the electrode portion, conductivity, hot water resistance, and operating characteristics of the fuel cell were evaluated in the same manner as in Example 1. The evaluation results are shown in Table 1.

### Comparative Example 1

Using a blasting device, the electrode portion (channel portion) of the premolded article F-1 obtained in Preparation Example 3 was pretreated by subjecting it to a blast treatment. Then, the same operation as in Example 1 was conducted without being subjected to the blast treatment. Thus, a separator S-1 for a fuel cell was obtained. Also with respect to this separator, wettability with water of the channeled passage of the electrode portion, conductivity, hot water resistance, and operating characteristics of the fuel cell were evaluated in the same manner as in Example 1. The evaluation results are shown in Table 1.

### Comparative Example 2

Using a blasting device, the electrode portion (channel portion) of the molded article F-1 obtained in Preparation Example 3 was pretreated by subjecting it to a blast treatment. Then, a surface modification treatment was conducted for 30 minutes using a UV ozone treatment device. Then, washing and drying were conducted in the same manner as in Example 1. Thus, a separator S-2 for fuel cell was obtained. Also with respect to this separator, wettability with water of the channeled passage of the electrode portion, conductivity, hot water resistance, and operating characteristics of the fuel cell were evaluated in the same manner as in Example 1. The evaluation results are shown in Table 1.

### Comparative Example 3

The same operation as in Example 1 was conducted, except that the blast treatment was not conducted. Thus, a separator S-3 for a fuel cell was obtained. Also with respect to this separator, wettability with water of the channeled passage of the electrode portion, conductivity, hot water resistance, and operating characteristics of the fuel cell were evaluated in the same manner as in Example 1. The evaluation results are shown in Table 1.

### Comparative Example 4

The same operation as in Example 1 was conducted, except that washing with ion-exchanged water was not conducted in Example 1.
After irradiating with electron beam and drying at 80°C for one hour, a separator S-4 for a fuel cell was obtained. Also with respect to this separator, wettability with water of the channeled passage of the electrode portion, conductivity, hot water resistance, and operating characteristics of the fuel cell were evaluated in the same manner as in Example 1. The evaluation results are shown in Table 1.

The measuring method and evaluation criteria used in the present invention will now be described.

### [Evaluation of hydrophilicity of molded article]

In the sample of the molded article obtained in the Example, the contact angle of the convex portion of the channel of the molded article was measured by a drop method using ion-exchanged water by using CA-Z type contact angle meter manufactured by Kyowa Interface Science Co., Ltd. As the measurement value, the average value of eight measurements was used. The measurement atmosphere was 22°C at a humidity of 60%.
In addition, it is desirable that the value of the contact angle be 50°C or less for the performance.

### [Evaluation of water discharging property of molded article]

The molded article obtained in the above-described Example was used as a sample, and the water-discharging property was evaluated by a simple method by using only the sample.
The sample was put on a horizontal table, and one drop of ion-exchanged water (0.025 g) was dropped on the electrode flow passage from a height of 5 mm above the channel by using an injector and an injector needle. As the measurement value, the length of the expansion in the channel after ten seconds was measured and the average of the values obtained from eight measurements at eight times was used. The measurement atmosphere was 22 °C at a humidity of 60%.
At this time, in the case that the inside of the channel was hydrophilic and had excellent wettability with water, water was rapidly expanded. As the target of the water-discharging property at the time, when it was 20 mm or more, it was determined that wettability is excellent. Moreover, when 10 mm or less, wettability with water of the channel portion was determined. In this case, the state immediately after the water was dropped was maintained.
In the case that the water drop was rapidly expanded in the channel, it was expected that the channel was not blocked. On the other hand, in the case that the water drop was not rapidly expanded in the channel, the channel was blocked and supply of a fuel gas and so forth and discharge of water became unstable, and the possibility of harmfully affecting power generation characteristic became high.

### [Evaluation of conductivity of molded article]

The molded article obtained in the Example was set to be a sample, and the contact resistance of the electrode part (channel , flow passage portion) was measured and thereby the conductivity was evaluated.
Specifically, two gold-coated electrodes having the same size (14.5x14.5 cm²) as the electrode part of the sample and a carbon paper having the same size (thickness of 0.4 mm) were prepared and the electrode parts of the molded article were sandwiched with the carbon paper and the electrodes, and furthermore, an alternate current of 10 mA was applied under a pressure of 1 MPa by a hydraulic press. The voltage drop ΔV (µV) between the electrodes at this time was measured and set to be an index of conductivity. The average of three measurements was used. As the voltage drop ΔV indicates a lower value, it can be determined that the conductivity is improved and the contact resistance is lower. By measurement under the same conditions, a relative comparison can be performed.
It is desirable that the value be equal to the ΔV value of the molded article of Comparative Example 1 without the graft treatment.

### [Evaluation of hot-water resistance of molded article]

The molded article obtained in the Example was set to a sample, and only the electrode part (channel, flow passage portion) was cut into a size of 25 mm x 50 mm and thereby sample pieces were produced. The samples were put in a fluoropolymer resin container containing ion-exchanged water was put and sealed, and the container was put in a drier machine of 95°C and boiling was performed for 500 hours. Then, the temperature was gradually cooled down and the sample pieces were taken out. The appearance at the time was evaluated visually. The evaluation criterion was as follows.
Pass: Shape of both surfaces of the molded article was satisfactorily maintained.
Failure: A portion of the channel of a surface of the molded article collapsed.

### [Evaluation of water-discharging property of molded article after hot-water resistance test]

With respect to the above-described samples after the hot-water resistance test, evaluation of the water-discharging property was performed. In addition, the sample was taken out, allowed to stand for 24 hours at room temperature and then dried.

### [Production of solid polymer type fuel cell and power-generation test]

The solid polymer electrolyte and the gas diffusion electrode were combined in the separator obtained in each of Examples and Comparative examples, and a solid polymer type fuel cell having simple cells was made. The power generation was performed under the condition of a cell temperature of 80°C, a dew-point temperature of humidified gases of 80°C, a utilization factor of hydrogen gas of 40%, a utilization factor of the air of 70%, and a current density of 0.2 A/cm². After 24 hours, the voltage measurement was performed for one hour, and the average voltage and the standard deviation of the voltage value fluctuation were calculated.
In addition, it is more desirable that the voltage be stably high. In addition, the blockage of the electrode flow passage caused fluctuation and lowering of the voltage value.

From the results in Table 1, in the separator for a fuel cell obtained in Example 1, the conductivity was good and the quality was high, and furthermore, wettability of the channel (flow passage) portion with water was excellent, and also the hot-water resistance was good. A high-performance separator for a fuel cell having excellent water-discharging property can be provided.
Furthermore, also in the power generation test by the simple cells of the solid polymer type fuel cell, the fluctuation of the power voltage was small and the output (power voltage) was stable.
Also in the separators for a fuel cell obtained in Examples 2 and 3, the conductivity was good and the quality was high, and furthermore, the channel (flow passage) portion had excellent wettability with water and also the hot-water resistance was good. A high-performance separator for a fuel cell having excellent water-discharging property can be provided. In the same manner, in a power generation test by simple cells of the solid polymer type fuel cell, the fluctuation of the power voltage was small and the output (power voltage) was stable.
On the other hand, the separator for a fuel cell obtained in Comparative Example 1 was not subjected to the graft treatment, and therefore the conductivity was excellent. However, wettability with water was poor. Accordingly, in the case of using the separator and incorporating it into simple cells of a solid polymer type fuel cell, the fluctuation of the power voltage was large and the output (the power voltage) was unstable.
In the separator for a fuel cell obtained in Comparative Example 2, the conductivity was excellent and also wettability with water was good. However, in the case of performing power generation under the same conditions, the output (power voltage) was unstable. After dismantling the fuel cell, the water-discharging property of the separator was measured, and therefore the distance that water was expanded was lowered to 10 mm. It was revealed that the hydrophilicity did not continue.
The separator for a fuel cell obtained in Comparative Example 3 had slightly poor wettability with water, and in the case of performing power generation under the same conditions, the output (power voltage) was unstable.
The separator for a fuel cell obtained in Comparative Example 4 had good wettability with water. However, in the case of performing power generation in the same condition, the output (power voltage) was lowered gradually from 0.7 V to 0.58 V and the output was unstable.

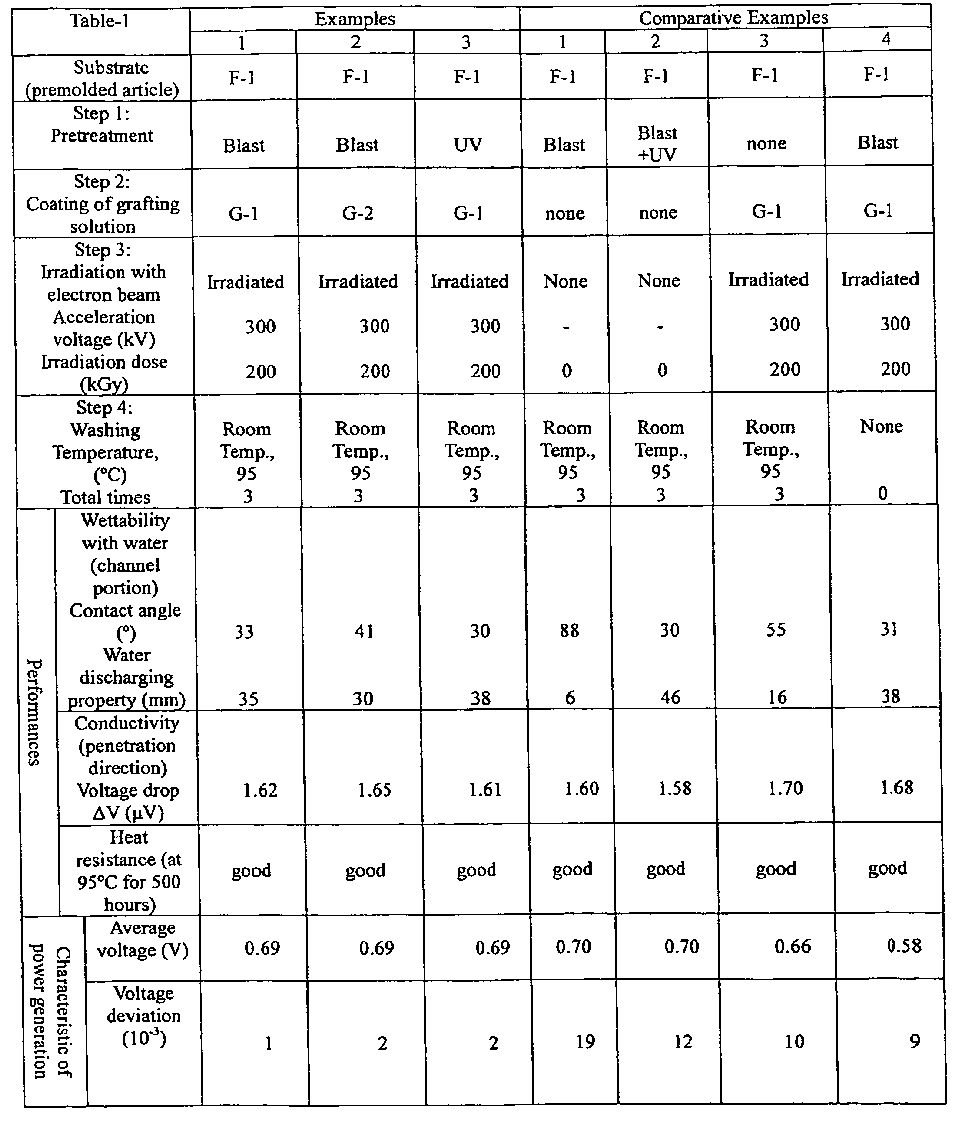

### INDUSTRIAL APPLICABILITY

In the fuel cell separator obtained in the present invention, physical properties such as mechanical strength and conductivity were not impaired and the surface was hydrophilized, and therefore the property of discharging water was excellent. Moreover, hydrophilicity could be provided by graft polymerization only at the site requiring hydrophilicity, and therefore a desirable product could be provided. That is, a radically polymerizable monomer having a hydrophilic group was coated only in the channel portion, and by going through the steps of irradiating with ionizing radiation, the separator had high wettability with water in the channel portion, and water was allowed to flow and be discharged without being accumulated. Consequently, in such a separator, the supply of a fuel gas was not prevented by excess water, and therefore in a fuel cell stack comprising the separator incorporated therein, the electromotive force became stable, and thus it became possible to stably generate power over a long period.

## Claims

1. A method of producing a fuel cell separator in which at least a portion of a premolded article composed of a thermosetting resin and a carbon material, or a thermoplastic resin and a carbon material is provided with hydrophilicity, comprising the steps of:
(1) treating the premolded article for enhancing affinity with a solution of a radically polymerizable monomer having a hydrophilic group and/or a functional group which can be converted into a hydrophilic group;
(2) coating the solution of the radically polymerizable monomer having a hydrophilic group and/or a functional group which can be converted into a hydrophilic group, on the treated surface;
(3) irradiating the treated surface with ionizing radiation; and
(4) cleaning the fuel cell separator obtained through steps 1 to 3;
wherein steps 1 to 4 are sequentially carried out, or step 1, step 3, step 2, and step 4 are sequentially carried out.

2. The method of producing a fuel cell separator according to claim 1, wherein steps 1 to 4 are sequentially carried out.

3. The method of producing a fuel cell separator according to claim 1, wherein the hydrophilic group or the functional group which can be converted into a hydrophilic group is at least one functional group selected from the group consisting of a carboxyl group, lactam ring, sulfonic acid group, hydroxyl group, silyl group, epoxy group, phosphoric acid group, N,N-dialkylamino group, and N-alkylamido group.

4. The method of producing a fuel cell separator according to claim 1, wherein the hydrophilic group or the functional group which can be converted into a hydrophilic group is at least one functional group selected from the group consisting of a hydroxyl group, lactam ring, silyl group, and epoxy group.

5. The method of producing a fuel cell separator according to claim 1, wherein the treatment for enhancing affinity in step 1 is at least one of a blast treatment and an ultraviolet irradiation treatment.

6. The method of producing a fuel cell separator according to claim 1, wherein step 4 comprises a step of cleaning with hot water.

7. A solid polymer type fuel cell comprising a solid polymer electrolyte film, a gas diffusion electrode, and the fuel cell separator obtained by the method according to any one of claims 1 to 6.

## Patentansprüche

1. Verfahren zur Herstellung eines Brennstoffzellenseparators, wobei zumindest ein Teil eines vorgeformten Gegenstands, bestehend aus einem wärmehärtenden Harz und einem Kohlenstoffmaterial, oder einem thermoplastischen Harz und einem Kohlenstoffmaterial, mit Hydrophilie versehen wird, umfassend die Schritte:
(1) Behandeln des vorgeformten Gegenstands zur Verstärkung der Affinität mit einer Lösung eines radikalisch polymerisierbaren Monomers mit einer hydrophilen Gruppe und/oder einer funktionellen Gruppe, die in eine hydrophile Gruppe umgewandelt werden kann;
(2) Auftragen der Lösung des radikalisch polymerisierbaren Monomers mit einer hydrophilen Gruppe und/oder einer funktionellen Gruppe, die in eine hydrophile Gruppe umgewandelt werden kann, auf die behandelte Oberfläche;
(3) Bestrahlen der behandelten Oberfläche mit ionisierender Strahlung; und
(4) Reinigen des durch Schritte 1 bis 3 erhaltenen Brennstoffzellenseparators;
wobei die Schritte 1 bis 4 nacheinander ausgeführt werden, oder Schritt 1, Schritt 3, Schritte 2 und Schritt 4 werden nacheinander ausgeführt.

2. Verfahren zur Herstellung eines Brennstoffzellenseparators gemäß Anspruch 1, wobei die Schritte 1 bis 4 nacheinander ausgeführt werden.

3. Verfahren zur Herstellung eines Brennstoffzellenseparators gemäß Anspruch 1, wobei die hydrophile Gruppe oder die funktionelle Gruppe, die in eine hydrophile Gruppe umgewandelt werden kann, mindestens eine Gruppe ist, ausgewählt aus der Gruppe, bestehend aus einer Carboxylgruppe, einem Lactamring, einer Sulfonsäuregruppe, einer Hydroxylgruppe, einer Silylgruppe, einer Epoxygruppe, einer Phosphorsäuregruppe, einer N,N-Dialkylaminogruppe und einer N-Alkylamidogruppe.

4. Verfahren zur Herstellung eines Brennstoffzellenseparators gemäß Anspruch 1, wobei die hydrophile Gruppe oder die funktionelle Gruppe, die in eine hydrophile Gruppe umgewandelt werden kann, mindestens eine Gruppe ist, ausgewählt aus der Gruppe, bestehend aus einer Hydroxylgruppe, einem Lactamring, einer Silylgruppe und einer Epoxygruppe.

5. Verfahren zur Herstellung eines Brennstoffzellenseparators gemäß Anspruch 1, wobei die Behandlung zur Verstärkung der Affinität in Schritt 1 mindestens eine ist aus Strahlbehandlung und einer Ultraviolettstrahlungsbehandlung.

6. Verfahren zur Herstellung eines Brennstoffzellenseparators gemäß Anspruch 1, wobei Schritt 4 einen Schritt des Reinigens mit heißem Wasser umfasst.

7. Festpolymertyp-Brennstoffzelle, umfassend einen festen Polymerelektrolytfilm, eine Gasdiffusionselektrode und den durch das Verfahren gemäß einem beliebigen der Ansprüche 1 bis 6 erhaltenen Brennstoffzellenseparator.

## Revendications

1. Procédé de production d'un séparateur de pile à combustible dans lequel au moins une portion d'un article prémoulé composé d'une résine thermodurcissable et d'un matériau carbone, ou une résine thermoplastique et un matériau carbone est pourvue d'une hydrophilie, comprenant les étapes consistant à :
(1) traiter l'article prémoulé en vue de renforcer l'affinité avec une solution d'un monomère polymérisable par radicaux comportant un groupe hydrophile et/ou un groupe fonctionnel qui peut être converti en un groupe hydrophile ;
(2) revêtir la surface traitée avec la solution du monomère polymérisable par radicaux ayant un groupe hydrophile et/ou un groupe fonctionnel qui peut être converti en un groupe hydrophile ;
(3) irradier la surface traitée avec un rayonnement ionisant ; et
(4) nettoyer le séparateur de pile à combustible obtenu par les étapes 1 à 3 ;
où les étapes 1 à 4 sont réalisées séquentiellement, ou bien l'étape 1, l'étape 3, l'étape 2 et l'étape 4 sont réalisées séquentiellement.

2. Procédé de production d'un séparateur de pile à combustible selon la revendication 1, dans lequel les étapes 1 à 4 sont réalisées séquentiellement.

3. Procédé de production d'un séparateur de pile à combustible selon la revendication 1, dans lequel le groupe hydrophile ou le groupe fonctionnel qui peut être converti en un groupe hydrophile est au moins un groupe fonctionnel choisi dans le groupe consistant en un groupe carboxyle, un cycle lactame, un groupe acide sulfonique, un groupe hydroxyle, un groupe silyle, un groupe époxy, un groupe acide phosphorique, un groupe N,N-dialkylamino et un groupe N-alkylamido.

4. Procédé de production d'un séparateur de pile à combustible selon la revendication 1, dans lequel le groupe hydrophile ou le groupe fonctionnel qui peut être converti en un groupe hydrophile est au moins un groupe fonctionnel choisi dans le groupe consistant en un groupe hydroxyle, un cycle lactame, un groupe silyle et un groupe époxy.

5. Procédé de production d'un séparateur de pile à combustible selon la revendication 1, dans lequel le traitement permettant de renforcer l'affinité à l'étape 1 est au moins l'un d'un traitement de décapage et d'un traitement par irradiation aux ultraviolets.

6. Procédé de production d'un séparateur de pile à combustible selon la revendication 1, dans lequel l'étape 4 comprend une étape de nettoyage avec de l'eau chaude.

7. Pile à combustible de type polymère solide comprenant un film d'électrolyte polymère solide, une électrode de diffusion de gaz et le séparateur de pile à combustible obtenu par le procédé selon l'une quelconque des revendications 1 à 6.
